(19) Europäisches Patentamt
European Patent Office
Office européen des brevets

(11) Publication number: **0 153 600**
**B1**

(12) **EUROPEAN PATENT SPECIFICATION**

(45) Date of publication of patent specification: **19.11.87**

(51) Int. Cl.⁴: **C 09 D 7/12** // (C09D7/12, C08G77:20, C08F230:08)

(21) Application number: **85100919.1**

(22) Date of filing: **30.01.85**

# (54) Coating compositions containing polymeric microparticles.

(30) Priority: **01.02.84 US 576080**

(43) Date of publication of application:
**04.09.85 Bulletin 85/36**

(45) Publication of the grant of the patent:
**19.11.87 Bulletin 87/47**

(84) Designated Contracting States:
**AT BE DE FR GB IT SE**

(56) References cited:
**DE-A-1 745 341**
**US-A-4 075 141**

(73) Proprietor: **PPG INDUSTRIES, INC.**
**One PPG Place**
**Pittsburgh Pennsylvania 15272 (US)**

(72) Inventor: **Olson, Kurt Gordon**
**3935 Bakerstown Road**
**Gibsonia, Pa. 15044 (US)**
Inventor: **Hartman, Marvis Edgar**
**144 Rawlins Run Road**
**Pittsburgh, Pa. 15238 (US)**
Inventor: **Das, Suryya Kumar**
**110 Berg Drive**
**Pittsburgh, Pa. 15238 (US)**
Inventor: **Dowbenko, Rostyslaw**
**4136 Clarenceaux Drive**
**Gibsonia, Pa. 15044 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

**EP 0 153 600 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to coating compositions containing crosslinked polymeric microparticles, more particularly, silicon-containing crosslinked polymeric microparticles.

Crosslinked polymeric microparticles are well known in the prior art and as the name implies are particulate polymeric materials of colloidal dimensions, that is, about 0.001 to 10 microns in diameter which are gelled or crosslinked. By gelled or crosslinked is meant that strong solvents may cause the particles to swell somewhat but they will not dissolve the particles.

The crosslinked polymeric microparticles have been used extensively in coating compositions where they affect and modify the rheological properties of the coating composition and/or the physical properties of the coatings into which they are incorporated. For example, the crosslinked polymeric microparticles improve the spray efficiency of the coatings into which they are incorporated enabling complete coverage in fewer passes of the spray gun. They also improve the sag resistance of the coating and the metallic pigment pattern control of coating compositions containing such pigments.

Crosslinked polymeric microparticles and their use in coating compositions is known in the art. See, for example, U.S. 4,147,688 which discloses the preparation of crosslinked polymeric microparticles in organic solvent via non-aqueous dispersion polymerization techniques.

The preparation of crosslinked polymeric microparticles in aqueous medium is also well known in the art. See, for example, British Patent 967,051, U.S. 4,290,932, 4,296,013, 4,209,435 and 4,322,328.

None of this prior art, however, discloses the preparation of crosslinked polymeric microparticles with a hydrolyzable vinyl silane monomer.

The use of vinyl silane monomers in the preparation of aqueous polymeric latices is, however, known in the art. U.S. 3,706,697 and U.S. 3,814,716 disclose the formation of latex polymers by polymerizing a mixture of vinyl monomers which include a vinyl silane monomer. The latex polymers, however, are not disclosed as being crosslinked. Only after the latices are applied as coatings and heated is crosslinking shown.

An article appearing in Journal of Coatings Technology, Vol. 54, No. 684, January 1982, pages 69—82, entitled "Feasibility of Using Alkoxysilane-Functional Monomers for the Development of Crosslinkable Emulsions" by Bourne et al discloses the preparation of aqueous latices of acrylic polymers which are prepared in part from alkoxysilane-functional monomers. The reference discusses the variables in latex polymerization which affect the hydrolysis of the alkoxysilane-functional monomer. The reference discloses latices which exhibited crosslinking as indicated by the formation of acetone-insoluble polymers. The reference, however, does not disclose use of these latices in coating compositions with other film-forming polymers, although the reference does indicate that various latices can be used as film formers themselves. The purpose of forming films was to evaluate the degree of crosslinking since films which were significantly crosslinked would not coalesce well.

US—A—4 075 141 refers to coating compositions comprising a solution or dispersion of carboxylic acid amide interpolymers and crosslinked polymeric microparticles. The crosslinked polymeric microparticles are formed by radical addition copolymerization of an alpha, beta-ethylenically unsaturated monocarboxylic acid, at least one other copolymerizable ethylenically unsaturated monomer and a crosslinking monomer selected from the group consisting of epoxy-group containing compounds, alkylene imines, organoalkoxysilanes and mixtures thereof in the presence of a dispersing liquid which is a solvent for the polymerizable monomers but a non-solvent for the resultant polymer, and a dispersion stabilizer containing at least two segments of which one segment is solvated by said dispersing liquid and a second segment is of different polarity than said first segment and is relatively insoluble in said dispersing liquid.

The reference is limited to one special type film-forming polymer. Furthermore, the reference does not disclose aqueous emulsion polymerization techniques as methods for the preparation of microparticles but requires the use of a special dispersion stabilizer.

Summary of the invention

In accordance with the present invention, a coating composition comprising a film-forming polymer in combination with silicon-containing crosslinked polymeric microparticles is provided. The crosslinked polymeric microparticles are prepared by aqueous emulsion polymerization techniques of a mixture of vinyl monomers which includes a hydrolyzable vinyl silane monomer which participates in the crosslinking reaction of the polymerized vinyl monomers. The invention also provides for a method for coating substrates by applying a coating composition on the substrates.

Detailed description

The hydrolyzable vinyl silane monomers employed in the practice of the present invention are those silanes of the general formula $(R)_3$—Si—X wherein X represents a radical selected from the groups consisting of

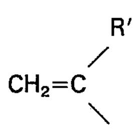

and

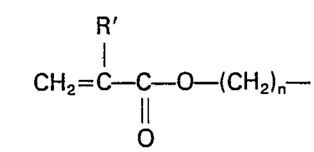

wherein each R individually represents a hydrolyzable radical selected from the group consisting of hydroxy, acetoxy and alkoxy radicals, n is an integer of from 1 to 8 and R′ is hydrogen or methyl. Illustrative examples of such alkoxy radicals are those having 1 to 10 carbon atoms such as methoxy, ethoxy, methoxyethoxy and the like including mixed alkoxy radicals. Preferably, R is selected from the group consisting of methoxy and ethoxy.

Such silane monomers as well as their methods of preparation are well known in the art. Examples include vinyl trimethoxysilane, vinyl triethoxysilane, and silane monomers of the structure:

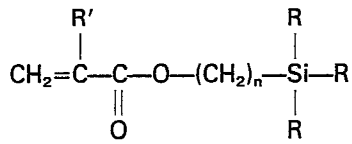

where R′ is hydrogen or methyl and n is 3, and R is as defined above, such as gamma-acryloxypropyltrimethoxysilane and gamma-methacryloxypropyltrimethoxysilane, which is preferred.

Mixtures of hydrolyzable vinyl silane monomers can also be used as can mixtures of hydrolyzable vinyl silane monomers and hydrolyzable silanes and silicates which do not contain vinyl groups. These include the partial hydrolysates of such silanes and silicates. Examples of such materials include those of the structure $(R'')_3$—Si—Y wherein each R″ individually represents a hydrolyzable radical selected from the group consisting of hydroxy, acetoxy and alkoxy radicals and Y is a group free of vinyl unsaturation such as alkyl, including cycloalkyl, aryl and substituted alkyl and aryl. Examples of substituents would be chloro, alkyl, aryl and alkoxy. Also, Y could be an alkoxy group. Examples of suitable silanes and silicates would be methyltrimethoxysilane, methyltriethoxysilane, beta(3,4-epoxycyclohexyl)ethyltrimethoxysilane, tetramethylsilicate and tetraethylsilicate, and the partial hydrolysates thereof.

Although the hydrolyzable silanes and silicates do not participate in the vinyl polymerization reaction, they do participate in the subsequent hydrolysis-condensation reaction and depending on the identity of the silane and silicate, contribute beneficial properties such as increased crosslink density, better rheology and better economics.

The amount of hydrolyzable vinyl silane or the mixture with the hydrolyzable silanes and silicates which do not contain vinyl groups should be sufficient to produce a crosslinked microparticle. Preferably, the amount of vinyl silane monomer is at least one percent, more preferably about 1 to 30 percent, and most preferably 3 to 20 percent by weight of the vinyl monomers and silanes and silicates which do not contain vinyl groups. Amounts less than 1 percent are not preferred because of low crosslinking whereas amounts greater than 30 percent are not preferred because of the formation of grit and coagulum in the polymerization process.

The vinyl silane monomers described above are polymerized with other vinyl monomers to form the resultant polymer. Examples of other vinyl monomers are acrylic and methacrylic ester monomers having the structural formula:

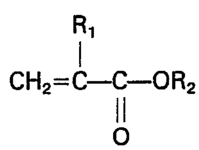

wherein $R_1$ is hydrogen or methyl, $R_2$ is an organic radical containing from 1 to 20 carbon atoms such as alkyl, cycloalkyl, aryl, aralkyl, alkaryl and the like. Useful acrylic esters of the above type include alkyl acrylates and alkyl methacrylates containing from 1 to 20 carbons atoms in the alkyl group. Examples include ethyl acrylate, methyl methacrylate, butyl acrylate, isobutyl methacrylate, 2-ethylhexyl methacrylate and the like. Although the ester substituent is preferably derived from hydrocarbon radicals, other functional substituted ester substituents may be employed, for example, hydroxyalkyl preferably containing 2 to 4 carbon atoms in the alkyl group, alkoxyalkyl preferably containing 1 to 4 carbon atoms in the alkoxy group and 2 to 4 carbon atoms in the alkyl group, and glycidyl. Examples of such monomers include hydroxypropyl methacrylate, hydroxyethyl acrylate and glycidyl methacrylate.

The amount of acrylic ester is usually present in amounts of up to about 99 percent, preferably about 10 to 99 percent, most preferably 30—90 percent by weight, based on total weight of vinyl monomers.

In addition to the vinyl silanes and the ester of acrylic and methacrylic acid, other vinyl monomers may be used. Examples of other polymerizable vinyl monomers include conjugated dienes such as butadiene and isoprene; vinyl esters such as vinyl acetate; vinyl halides such as vinyl chloride and vinyl fluoride; vinyl aromatics such as styrene and vinyl toluene; vinyl ethers such as methyl vinyl ether; divinyl monomers such as glycol diacrylates and methacrylates, for example, ethylene glycol dimethyacrylate; amides of alpha, beta-ethylenically unsaturated carboxylic acids such as acrylamide and methacrylamide; N-alkoxyalkylamides of alpha, beta-ethylenically unsaturated carboxylic acids such as N-methoxymethylacrylamide and N-butoxymethylacrylamide; alpha, beta-ethylenically unsaturated nitriles such as acrylonitrile and methacrylonitrile; and acid-containing vinyl monomers such as acrylic acid, methacrylic acid and sulfoethyl methacrylate. Preferred vinyl monomers are styrene and sulfoethyl methacrylate.

These and other copolymerizable vinyl monomers when used are present in amounts of about 0 to 90, and preferably about 0 to 50 percent by weight, based on total weight of vinyl monomers.

The vinyl monomers as described above are polymerized by aqueous emulsion polymerization techniques. In conducting the emulsion polymerization, the mixture of monomers is usually added slowly to a mixture of surfactant and water with agitation and under an inert atmosphere. In the presence of free radical initiator, polymerization is conducted in the aqueous medium with a mixture of monomers being in the dispersed phase.

Among the surfactants which may be used are anionic, cationic and non-ionic surfactants including mixtures of anionic and non-ionic and mixtures of cationic and non-ionic. Examples of anionic surfactants include alkali metal and ammonium salts of long chain alkyl sulfates, sulfonates and sulfosuccinates; alkali metal and ammonium phosphate esters and alkali metal and ammonium alkylphenoxypolyethoxysulfates, sulfonates or phosphates. Examples of suitable anionic surfactants include sodium lauryl sulfate, sodium cetyl sulfate, sodium or ammonium dioctylsulfosuccinate and polyethylene oxide acid phosphate mono and diesters.

Examples of cationic surfactants include quaternary ammonium salts such as tetramethyl ammonium chloride and ethylene oxide condensates of cocoamines.

Examples of non-ionic surfactants include alkylphenoxypolyethoxyethanols having alkyl groups of from about 7 to 18 carbon atoms and 6 to 60 or more oxyethylene units such as octylphenoxypolyethoxyethanol, nonylphenoxypolyethoxyethanol and dodecylphenoxypolyethoxyethanol. Also, ethylene oxide derivatives of long chain carboxylic acids such as lauric and oleic acid can be used as can ethylene oxide condensates of long chain alcohols such as octyl, decyl, lauryl or cetyl alcohols.

Preferred surfactants are anionic and mixtures of anionic and non-ionic such as dialkyl sulfosuccinate salts and alkylphenoxypolyethoxyethanols.

The amount of surface active agent when used can vary in amount up to 30 percent, preferably about 0 to 20 percent, and more preferably about 2 to 10 percent by weight based on total weight of the monomers.

As the polymerization catalyst, there may be used one or more peroxides which are known to act as free radical catalysts and preferably which are soluble in the aqueous medium. Preferred are the persulfates such as ammonium, sodium and potassium persulfate with ammonium persulfate being the most preferred. Perphosphates can also be used such as potassium perphosphate. Organic peroxides such as t-butyl-hydroperoxide and cumene hydroperoxide can also be used as can hydrogen peroxide. The amount of peroxide catalyst required is roughly proportional to the concentration of the mixture of monomers and is usually from about 0.4 to 10, preferably 0.5 to 5 percent by weight based on total weight of the monomer mixture.

In order to effect polymerization at a temperature below that at which coagulation might occur, it is sometimes desirable to activate the catalyst. This may best be accomplished by using a so-called redox system in which a reducing agent is present in addition to a peroxide catalyst. Many examples of such systems are known. Agents such as hydrosulfites, sulfoxylates, sulfites, bisulfites and metabisulfites can be used. Examples of these include sodium hydrosulfite, sodium formaldehyde-sulfoxylate, potassium bisulfite and sodium metabisulfite. Redox systems may be activated by the presence of small amounts of polyvalent metal ions such as ferrous ions from ferrous sulfate. A few parts per million are usually sufficient. The amount of the redox activator varies somewhat with the choice of initiator activator and choice of emulsifying agent and with the particular unsaturated monomers involved. Usually an amount within the range of 0.0001 to 3 percent by weight of activator based on weight of mixture of monomers is sufficient.

Copolymerization is usually conducted at temperatures below about 90°C., preferably within the range of 25 to 80°C., although slightly lower and somewhat higher temperatures may be used. During polymerization, the temperature can be controlled in part through the rate at which the monomers are supplied and polymerized and through applied heating and cooling.

The polymerization process can be carried out batchwise or continuously. It is possible to work entirely batchwise emulsifying the entire charge of monomers and proceeding with polymerization. It is usually advantageous, however, to start with part of the monomers which are to be used and add more monomers as polymerization proceeds. An advantage of gradual addition of monomers lies in reaching a high solids content with optimum control and with maximum uniformity of product. Additional catalyst or additional components of the redox system may also be added as polymerization proceeds.

It is preferred that at the beginning of the reaction, the pH of the reaction mixture be at least 4, usually within the range of 5 to 8. As the reaction proceeds, the pH of the reaction mixture can be gradually lowered. This can be done, for example, by using a persulfate initiator such as ammonium persulfate which decomposes during the course of the reaction to generate acid thereby lowering the pH and accelerating the hydrolysis-condensation reaction of the silane moiety. It has been found that at the completion of a successful reaction, the pH of the reaction mixture is typically within the range of about 2 to 4. Other means which can be used to control the pH of the reaction medium include the use of buffers such as sodium bicarbonate or mono- or di-potassium phosphate or the addition of acid such as para-toluenesulfonic acid

towards the end of the reaction to accelerate the hydrolysis-condensation reaction. Also, a catalyst such as tin catalyst, for example, dibutyltin dilaurate, can also be added to promote hydrolysis and crosslinking.

The aqueous emulsions prepared in accordance with the invention contain discrete polymeric particles. Usually the emulsions will have a resin solids content of from about 10 to 60 percent by weight, the percentage by weight being based on total weight of the emulsion. Usually, the particles will be of a size of 10 µm or less, preferably 0.005 to 10 µm, and more preferably from about 0.1 to 1 µm, the particle size being determined by light scattering techniques. The particles will be gelled or crosslinked as evidenced by their insolubility in acetone. When the microgel prepared in accordance with the invention is dried, placed in a Soxhlet extractor and extracted 12 hours with boiling acetone, at least 40, preferably at least 60, and more preferably at least 80 percent by weight of the polymer is not extracted. One of the advantages of forming microparticles from the silane group-containing polymers is the fact that they can be prepared in a highly crosslinked state, i.e., 80 to 100 percent by weight not extracted by boiling acetone. This is of particular advantage when the materials are inverted in organic solvent for use in solvent-based coating compositions as described in more detail below. The more highly crosslinked particles are less swellable in the organic solvent and as a result, much higher solids contents can be obtained for the organic dispersion of the crosslinked microparticles. This enables the formulation of coating compositions with less volatile organic content (VOC) contributed from the crosslinked microparticle component of the coating composition.

The crosslinked microparticles prepared as described above can be incorporated into water-based coating compositions by simply mixing the emulsion with the coating composition. Alternately, the microgel can be spray dried or filtered or coagulated and filtered from the aqueous emulsion and dried and mixed into water-based coating compositions or in organic solvent-based coating compositions. Preferably, for formulation into organic solvent-based coating compositions, the aqueous emulsion of the crosslinked microparticle is inverted into organic solvent and the water removed by azeotropic distillation. All or a portion of the water can be removed (dehydrated or partially dehydrated), and the resulting dispersion mixed with the appropriate organic solvent-based coating composition.

The coating compositions into which the crosslinked silicon-containing microparticles are incorporated comprise a film-forming polymer which is not crosslinked although it may be crosslinkable. The coating composition will also usually contain a diluent, pigment, particularly metallic pigment, and additives normally associated with coating compositions.

The film-forming polymer may be any of the polymers known to be useful in coating compositions. One suitable class of polymer consists of those which are derived from one or more ethylenically unsaturated monomers. Particularly useful members of this class are the acrylic addition polymers which are well established for the production of coatings in the automobile industry, that is to say, polymers or copolymers of one or more alkyl esters of acrylic acid or methacrylic acid, optionally together with other ethylenically unsaturated monomers. These polymers may be of either the thermoplastic type or the thermosetting, crosslinking type. Suitable acrylic esters for either type of polymer include methyl methacrylate, ethyl methacrylate, propyl methacrylate, butyl methacrylate, ethyl acrylate, butyl acrylate and 2-ethylhexyl acrylate. Suitable other, copolymerizable monomers include vinyl acetate, vinyl propionate, acrylonitrile, styrene and vinyl toluene. Where the polymer is required to be of the crosslinking type, suitable functional monomers to be used in addition to the latter include acrylic acid, methacrylic acid, hydroxyethyl acrylate, hydroxyethyl methacrylate, 2-hydroxypropyl acrylate, 2-hydroxypropyl methacrylate, N-(alkoxymethyl)acrylamides and N-(alkoxymethyl)methacrylamides, where the alkoxy group may be, for example, a butoxy group, glycidyl acrylate and glycidyl methacrylate. The coating composition may in such a case contain also a crosslinking agent such as a diisocyanate, a diepoxide, or, especially, a nitrogen resin, that is to say, a condensate of formaldehyde with a nitrogeneous compound such as urea, thiourea, melamine or benzoguanamine, or a lower alkyl ether of such a condensate in which the alkyl group contains from 1 to 4 carbon atoms. Particularly suitable crosslinking agents are melamine-formaldehyde condensate in which a substantial proportion of the methylol groups have been etherified by reaction with butanol.

For the purposes of the foregoing general definition of the invention, the crosslinking agent, where present, is considered as being a part of the film-forming polymer.

The film-forming polymer may be prepared by solution polymerization of the monomer(s), in the presence of suitable catalysts or initiators such as organic peroxides or azo compounds, e.g., benzoyl peroxide or azodiisobutyronitrile. Conveniently, the polymerization may be carried out in the same organic liquid that is to form the diluent constituent of the coating composition, or in a liquid which is to form a part of that diluent. Also, for aqueous-based compositions, the film-forming polymer may be prepared by aqueous emulsion polymerization techniques well known in the art.

Besides acrylic addition polymers, other film-forming polymers may be used such as an alkyd resin or a polyester. Such polymers may be prepared in known manner by condensation of polyhydric alcohols and polycarboxylic acids, with or without the inclusion of natural drying oil fatty acids. Suitable polyhydric alcohols include ethylene glycol, propylene glycol, butylene glycol, 1,6-hexylene glycol, neopentyl glycol, diethylene glycol, triethylene glycol, tetraethylene glycol, glycerol, trimethylolpropane, trimethylolethane, pentaerythritol, dipentaerythritol, tripentaerythritol, hexanetriol, oligomers of styrene and allyl alcohol (for example, that sold by Monsanto Chemical Company under the designation RJ 100®) and the condensation

products of trimethylolpropane with ethylene oxide or propylene oxide (such as the products known commercially as "Niax®" triols). Suitable polycarboxylic acids include succinic acid (or its anhydride), adipic acid, azelaic acid, sebacic acid, maleic acid (or its anhydride), fumaric acid, muconic acid, itaconic acid (or its anhydride), phthalic acid (or its anhydride), isophthalic acid, terephthalic acid, trimellitic acid (or its anhydride) and pyromellitic acid (or its anhydride). Where it is desired to produce air-drying alkyd resins, suitable drying oil fatty acids which may be used include those derived from linseed oil, soya bean oil, tall oil, dehydrated castor oil, fish oils or tung oil. Normally, it is preferred that the oil length of such an alkyd resin should not exceed 50 percent. All these polyester and alkyd resins contain a proportion of free hydroxyl and/or carboxyl groups which are available for reaction, if desired, with suitable crosslinking agents as discussed above.

Besides polyesters, the film-forming polymer can be a polyurethane resin. Examples of these polymers are described in U.S. 3,954,899 to Chang et al and U.S. 4,147,679 to Scriven et al.

Yet another type of polymer which may be employed as the film-forming polymer are the nitrogen resins, which have already been described in the roll of crosslinking agents for acrylic polymers of the thermosetting type. These same resins can be employed as film-forming materials in their own right and, for this purpose, the preferred resins are again melamine-formaldehyde condensates in which a substantial proportion of the methylol groups are etherified by reaction with an alcohol such as butanol.

Besides solution polymers as described generally above, the film-forming polymer may also be dispersed in the diluent. Coating compositions containing such polymers are commonly referred to as non-aqueous dispersions. These are described in U.S. 3,050,412; 3,198,759; 3,232,903 and 3,255,135. Film-forming polymers prepared from non-aqueous dispersions can be thermoplastic or thermosetting and are typically prepared from polymerizing the ethylenically unsaturated monomers described above for the solution polymers. The monomers should be chosen such that the polymer derived from the monomer is insoluble in the diluent.

The crosslinked silicon-containing microparticles of the invention are usually present in the coating composition in amounts of at least 0.5, preferably about 1 to 50, and more preferably about 1 to 25 percent by weight of the film-forming polymer. Amounts less than 0.5 percent by weight do not have a particularly beneficial effect on the rheological properties of the coating composition.

The liquid diluent of the coating composition may be any of the liquids, or mixtures of liquids, which are conventionally used as polymer solvents in coating compositions, for example, aliphatic hydrocarbons such as hexane and heptane, aromatic hydrocarbons such as toluene and xylene, and petroleum fractions of various boiling point ranges which are predominantly aliphatic but have a significant aromatic content, esters such as butyl acetate, ethylene glycol diacetate and 2-ethoxyethyl acetate, ketones such as acetone, methyl isobutyl ketone and methyl amyl ketone and alcohols such as butyl alcohol. Also, water can be the diluent, or compatible mixtures of water and organic liquids can be used as diluents. The actual liquid or mixture of liquids selected as the diluent will depend upon the nature of the film-forming polymer, according to principles which are well known in the coatings art, in order that the polymer shall be soluble or dispersible in the diluent.

When the diluent is used, it is typically used in an amount of about 30 to 80 percent by weight of total solids plus diluent.

The crosslinked silicon-containing microparticles of the present invention are particularly useful in high solids coating compositions, that is, those containing a solids content of at least 40 percent by weight; the solids being determined at 150°C. The microparticles of the present invention provide particularly good sag control to such high solids compositions.

The pigment included in the coating composition may be any of the pigments conventionally used in surface coating compositions, including inorganic pigments such as titanium dioxide, iron oxide, chromium oxide, lead chromate and carbon black and, organic pigments such as phthalocyanine blue and phthalocyanine green, carbazole violet, anthrapyrimidine yellow, flavanthrone yellow, isoindoline yellow, indanthrone blue, quinacridone violet and perylene reds. For the present purposes, the term "pigment" is here meant to embrace also conventional fillers and extenders, such as talc or kaolin.

The process of the invention is, however, of particular value in the case of coating compositions containing metallic flake pigmentation which are intended for the production of "glamour metallic" finishes chiefly upon the surfaces of automobile bodies as previously discussed. The presence of silicon-containing microparticles in coating compositions containing metallic pigmentation gives a valuable degree of improvement in proper orientation of the pigment resulting in a lustrous shiny appearance with excellent flop, distinctness of image and high gloss. By flop is meant the visual change in brightness or lightness of a metallic coating with a change in viewing angle, that is, a change from 180 to 90 degrees. The greater the change, the better the flop. Flop is important because it accentuates the lines of a curved surface such as an automobile body.

Suitable metallic pigments include in particular aluminum flake and copper bronze flake. In general, pigments of any kind may be incorporated in the coating composition in an amount of from 1 to 50 percent based on weight of coating solids. Where metallic pigmentation is employed, this is preferably in an amount of from 1 to 25 percent by weight of the aforesaid aggregate weight.

Such pigments, whether metallic or otherwise, may be incorporated into the coating compositions with the aid of known dispersants. Thus, in the case where the main film-forming polymer is of the acrylic

type, an acrylic polymer of similar composition may be employed as pigment dispersant. Any such polymeric dispersant is also considered to be part of the film-forming constituent.

If desired, the coating composition may additionally incorporate other known additives, for example, U.V. light stabilizers, catalyst and viscosity modifiers as is well known in the art.

The coating compositions of the present invention can be applied to various substrates to which they adhere to form coated articles. The compositions herein can be applied by any conventional method, including brushing, dipping, flow coating, electrodeposition, electrostatic spraying, and the like, but they are most often applied by air spraying. The usual spray techniques and equipment are utilized. The coatings of the present invention can be applied over virtually any substrate, including wood, metals, glass, cloth, plastics, foam and the like, as well as over various primers.

Besides one-coat applications, the coating composition of the present invention can be used in clear-over-color applications. In these applications, a pigmented or colored basecoat is adhered to the substrate or to a primed substrate to form a basecoat and a clear coating is adhered to the basecoat. The base and clear coats may be derived from organic solvent or aqueous-based coating compositions. The coating compositions of the present invention may be in the basecoat, the clear coat or both the basecoat and clear coat.

The invention is illustrated by but not limited to the following examples in which parts and percentages are by weight unless otherwise indicated.

## Examples

The following examples show the preparation of discrete polymeric microgel particles. A mixture of vinyl monomers including hydrolyzable vinyl silane monomer is polymerized by aqueous emulsion polymerization techniques. After completion of the polymerization, the emulsion is inverted with organic solvent and the resulting dispersion dehydrated by azeotropic distillation. The resulting microgel dispersions were then evaluated with organic solvent-based coating compositions for metallic pigment pattern control and sag resistance. A control without added microgel was also evaluated.

### Example I

In this example, a monomer mixture of methyl methacrylate, hydroxypropyl methacrylate and gamma-methacryloxypropyltrimethoxysilane was polymerized under aqueous emulsion polymerization techniques. The following kettle charge and feeds were used in the polymerization:

Kettle charge

| Ingredients | Parts by weight (grams) |
|---|---|
| Deionized water | 2305.0 |
| Aerosol OT®[1] | 11.0 |
| Triton N-101®[2] | 15.5 |

[1]Dioctylsulfosuccinate sodium salt (75 percent active) available from American Cyanamid Company.
[2]Nonylphenol-ethylene oxide condensate available from Rohm and Haas Company.

Feed A

| Ingredients | Parts by weight (grams) |
|---|---|
| Ammonium persulfate | 1.5 |
| Deionized water | 25.2 |

Feed B

| Ingredients | Parts by weight (grams) |
|---|---|
| Methyl methacrylate | 511.7 |
| Gamma-methacryloxypropyltri-methoxysilane | 160.7 |
| Hydroxypropyl methacrylate | 143.3 |

Feed C

| Ingredients | Parts by weight (grams) |
|---|---|
| Deionized water | 10.0 |
| Sodium metabisulfite | 1.0 |

Feed D

| Ingredients | Parts by weight (grams) |
|---|---|
| Deionized water | 10.0 |
| Ferrous sulfate (1.0% solution in deionized water) | 1.0 |

The kettle charge was heated from room temperature to 95°C under a nitrogen blanket and with agitation in a reaction vessel suitable for aqueous emulsion polymerization. The kettle charge was cooled to 75°C and the pH measured and found to be 5.04. Feed B was added to the reaction vessel over a period of 15 minutes while holding the temperature at 75°C. At the completion of Feed B, Feed A was added, followed by the addition of Feeds C and D. The reaction mixture became exothermic and the reaction was held for one hour at a temperature between 82—89°C which was the peak exotherm temperature. The reaction mixture was then cooled to 65°C and the pH of the reaction mixture was found to be 3.1. The reaction mixture was held for 6 hours at 65°C., cooled and filtered to remove grit. The reaction mixture had a solids content of 26.3 percent and a final pH of 2.7.

The emulsion was examined and found to contain discrete cross-linked polymeric microparticles. The particles were crosslinked to the extent of about 98 percent as determined by extraction with boiling acetone for 12 hours.

The aqueous emulsion prepared as described above was inverted into organic solvent and water removed by azeotropic distillation as follows:

Initial charge

| Ingredients | Parts by weight (grams) |
|---|---|
| Dowanol DPM®[1] | 413.7 |

[1]Monomethylether of dipropylene glycol available from Dow Chemical Company.

Feed A

| Ingredients | Parts by weight (grams) |
|---|---|
| Aqueous emulsion prepared as described above | 1000.6 |

Feed B

| Ingredients | Parts by weight (grams) |
|---|---|
| Isopropanol | 50.5 |
| Triethylorthoformate | 5.0 |

The initial charge was added to a distillation pot equipped with a mechanical agitator, thermometer, a Dean-Stark trap and reflux condenser. The initial charge was heated to a temperature of about 60°C under a vacuum of 80 millimeters of mercury. Feed A (50 ml) was added, distillation was then begun and the distillate was removed through the Dean-Stark trap. The distillate consisted of one layer which was composed of about 95 percent water and 5 percent Dowanol DPM®. Feed A was added incrementally to the pot over the period of about 5 hours while maintaining the temperature of the charge between 65 and 69°C. at a pressure of 80 millimeters of mercury. At the completion of the distillation, 760 ml. of distillate had been removed. The heat and vacuum were then shut off Feed B added and the product cooled to room temperature. The resultant dispersion had a resin solids content of 41.7 percent and a water content of about 1.5 percent.

A metallic pigment-containing coating composition was prepared with the microgel dispersion described immediately above as follows:

A pigment paste was prepared from the following ingredients:

| Ingredients | Parts by weight |
|---|---|
| Aluminum flake[1] | 76.9 |
| Aluminum flake[2] | 76.9 |
| Acrylic polymer[3] | 133.3 |
| Methyl amyl ketone | 112.9 |

[1]Coarse, size 11 available from Siberline Company.
[2]Medium, size 3 available from Alcoa Company.
[3]Available from Rohm and Haas as AT-400 CA.

The ingredients were blended together and agitated on a shaker to form the pigment paste.

A coating composition using the pigment paste described above was prepared by mixing together the following ingredients:

| Ingredients | Parts by weight |
|---|---|
| Pigment paste | 12.4 |
| AT-400 CA | 81.2 |
| Cymel-303®[1] | 30.0 |
| p-toluenesulfonic acid[2] | 6.0 |
| Microgel dispersion | 16.3 |
| Methyl amyl ketone | 26.4 |

[1]Aminoplast curing agent available from American Cyanamid Company.
[2]5 percent by weight solution in isopropanol.

The coating composition was thinned with additional methyl amyl ketone to a No. 4 Ford cup viscosity of 22 seconds.

The coating composition was sprayed onto primed steel panels at a dry film thickness of about 50.8 µm (2 mils) and the coating cured at 250°F. (121°C) for 30 minutes while the coated panel was at an angle of 30°. The cured coating was evaluated for gloss, sag resistance and metallic pigment pattern control. The results are reported in Table I below.

Example II

In this example, a monomer mixture of styrene, methyl methacrylate, butyl acrylate and gamma-methacryloxypropyltrimethoxysilane was polymerized in the presence of para-toluenesulfonic acid to facilitate crosslinking. The following kettle charge and feeds were used in the polymerization:

Kettle charge

| Ingredients | Parts by weight (grams) |
|---|---|
| Deionized water | 1107.9 |
| TRAM[1] | 15.9 |
| Triton N-101® | 47.7 |
| Para-toluenesulfonic acid | 0.9 |

[1]Ditridecylsulfosuccinate ammonium salt (60 percent active), available from American Cyanamid Company.

Feed A

| Ingredients | Parts by weight (grams) |
|---|---|
| Ammonium persulfate | 2.5 |
| Deionized water | 251.1 |

Feed B

| Ingredients | Parts by weight (grams) |
|---|---|
| Styrene | 262.9 |
| Methyl methacrylate | 102.1 |
| Gamma-methacryloxypropyltri-methoxysilane | 76.2 |
| Butyl acrylate | 117.8 |

The kettle charge was heated from room temperature to 89°C under a nitrogen blanket and with agitation in a reaction vessel suitable for aqueous emulsion polymerization. About 30 ml. of Feed B was added to the kettle charge, and the reaction temperature was held at 89°C for 5 minutes, followed by the addition of about 25 ml of Feed A. The reaction temperature was held at about 88°C for about 30 minutes, followed by the slow and simultaneous addition of Feeds A and B. Feed A was added over a 4-1/2 hour period and Feed B was added over a 4-hour period. During the additions of Feeds A and B, the reaction temperature was maintained between 86—88°C. At the completion of Feed A, the reaction mixture was cooled to 40°C and filtered. The reaction mixture had a solids content of about 29 percent and a final pH of 2.2

The emulsion was examined and found to contain discrete cross-linked polymeric microparticles. The particles were crosslinked to the extent of about 91 percent as determined by extraction with boiling acetone for 12 hours.

The aqueous emulsion prepared as described above was inverted into organic solvent and water removed by azeotropic distillation as follows:

Initial charge

| Ingredients | Parts by weight (grams) |
|---|---|
| Butanol | 276.3 |
| Isopar E®[1] | 310.8 |
| Methyl amyl ketone | 133.8 |
| Aqueous emulsion prepared as described above | 446.1 |

[1]Aliphatic naphtha solvent (B.P 116—139°C) available from Exxon Company.

The initial charge was added to a distillation pot equipped with a mechanical agitator, thermometer, a Dean-Stark trap and a reflux condenser. The initial charge was heated to a temperature of about 43°C under a vacuum of 110 mm of mercury, at which point reflux commenced.

The distillate collected in the Dean-Stark trap consisted of two phases. The bottom phase was continuously removed while the top phase was returned to the flask. When all of the water had been removed, the distillation temperature rose to 50°C and only one phase was visible in the Dean-Stark trap. At this point, organic solvent was removed. As solvent was removed, the temperature of distillation continued to rise. The pressure was continuously decreased so as to maintain a distillation temperature below 60°C. When the solids content of the product reached about 38 percent by weight, the heat and vacuum were turned off and the product was filtered. The water content of the product was found to be $<1$ percent.

A metallic pigment-containing coating composition was prepared with the microgel dispersion described immediately above as follows:

| Ingredients | Parts by weight |
|---|---|
| Pigment paste of Example I | 12.4 |
| AT 400 CA | 81.2 |
| Cymel 303® | 30.0 |
| p-toluenesulfonic acid (as in Example I) | 6.0 |
| Microgel dispersion of Example II | 16.0 |
| Methyl amyl ketone | 26.7 |

The coating composition was thinned with additional methyl amyl ketone to a No. 4 Ford cup viscosity of 22 seconds.

The coating composition was sprayed onto primed steel panels at a dry film thickness of about 50.8 µm (2 mils) and the coating cured and evaluated as described in Example I. The results are reported in Table I below.

Example III

In this example, a monomer mixture of styrene, butyl acrylate and gamma-methacryloxypropyltrimethoxysilane was polymerized in the presence of dibutyltin dilaurate to facilitate crosslinking. The following kettle charge and feeds were used in the polymerization:

Kettle charge

| Ingredients | Parts by weight (grams) |
|---|---|
| Deionized water | 1652.1 |
| TRAM | 25.3 |
| Triton N-101® | 56.0 |
| $K_2S_2O_8$ | 1.6 |

Feed A

| Ingredients | Parts by weight (grams) |
|---|---|
| Deionized water | 53.9 |
| $Na_2S_2O_5$ | 0.7 |

Feed B

| Ingredients | Parts by weight (grams) |
|---|---|
| Styrene | 552.3 |
| Gamma-methacryloxypropyltri-methoxysilane | 121.7 |
| Butyl acrylate | 442.4 |

Feed C

| Ingredients | Parts by weight (grams) |
|---|---|
| Dibutyltin dilaurate | 2.2 |
| Deionized water | 103.7 |
| TRAM | 2.2 |
| Triton N-101® | 2.2 |

The kettle charge was heated from room temperature to 57°C under a nitrogen blanket and with agitation in a reaction vessel suitable for aqueous emulsion polymerization. Feed B was added over a 15-minute period while maintaining the temperature of the reaction mixture between 51—57°C. After the completion of the addition of Feed B, the temperature of the reaction mixture was maintained at 51°C for 5 minutes with vigorous agitation. Feed A was added and after about 2 hours, the reaction mixture exothermed to 95°C and it began to foam. The reaction mixture was then cooled to 85°C and held for 2 hours. Feed C was then added and the reaction mixture held for 4 hours at a temperature of 84—93°C. The reaction mixture was then cooled to room temperature and filtered. The reaction mixture had a solids content of 26.3 percent and a pH of 3.7.

The emulsion was examined and found to contain discrete cross-linked polymeric microparticles. The particles were crosslinked to the extent of about 94 percent as determined by extraction with boiling acetone for 12 hours.

The aqueous emulsion prepared as described above was inverted into organic solvent and water removed by azeotropic distillation as follows:

The aqueous emulsion (601.4 grams) was charged to a distillation pot with 601.9 grams of 2-hexoxyethanol. The distillation pot was equipped with mechanical agitation, thermometer, a Dean-Stark trap and a reflux condenser. The charge was heated to a temperature of about 57°C under a vacuum of 120 mm of mercury with agitation. Distillation began and the distillate was removed through the Dean-Stark trap. Distillation was continued for about 2 hours while maintaining the temperature between 57—62°C. After the water was removed, the temperature began to rise so the vacuum was reduced to 40 mm of mercury and distillation continued until a temperature of 97°C at 40 mm of mercury was reached. The resultant dispersion had a resin solids content of 29.6 percent.

A metallic pigment-containing coating composition was prepared with the microgel dispersion described immediately above as follows.

| Ingredients | Parts by weight |
|---|---|
| Pigment paste of Example I | 12.4 |
| AT 400 CA | 81.2 |
| Cymel 303® | 30.0 |
| p-toluenesulfonic acid (as in Example I) | 6.0 |
| Microgel of Example III | 21.4 |
| Methyl amyl ketone | 21.3 |

The coating composition was thinned with additional methyl amyl ketone to a No. 4 Ford cup viscosity of 22 seconds.

The coating composition was sprayed onto steel panels at a film thickness of about 50.8 µm (2 mils) and the coating cured and evaluated as described in Example I. The results are reported in Table I below.

Example IV

In this example, a monomer mixture of 2-ethylhexylacrylate, styrene, butyl methacrylate and gamma-methacryloxypropyltrimethoxysilane was polymerized under aqueous emulsion polymerization techniques. Also present in the monomer charge was methyltrimethoxysilane. The following kettle charge and feeds were used in the polymerization:

Kettle charge

| Ingredients | Parts by weight (grams) |
|---|---|
| Deionized water | 2302.2 |
| Aerosol OT® | 11.1 |
| Triton No. 101® | 15.1 |

Feed A

| Ingredients | Parts by weight (grams) |
|---|---|
| Ammonium persulfate | 1.2 |
| Deionized water | 25.2 |

Feed B

| Ingredients | Parts by weight (grams) |
|---|---|
| 2-Ethylhexylacrylte | 154.7 |
| Styrene | 125.7 |
| Butyl methacrylate | 225.3 |
| Gamma-methacryloxypropyltri-methoxysilane | 76.8 |
| Methyltrimethoxysilane | 51.9 |

Feed C

| Ingredients | Parts by weight (grams) |
|---|---|
| Deionized water | 10.2 |
| Sodium metabisulfite | 1.0 |

Feed D

| Ingredients | Parts by weight (grams) |
|---|---|
| Deionized water | 10.1 |
| Ferrous sulfate | 0.1 |

The kettle charge was heated from room temperature to 85°C under a nitrogen blanket and with agitation in a reaction vessel suitable for aqueous emulsion polymerization. The kettle charge was cooled to 75°C and Feed B was added over a period of 10 minutes while holding the temperature at about 75°C. At the completion of Feed B, Feed A was added, followed by the addition of Feeds C and D. The reaction

mixture began to exotherm with the peak exotherm reaching 83°C. The reaction mixture was cooled to 65°C and held for 6 hours at this temperature, cooled and filtered. The reaction mixture had a solids content of 20.3 (theory 21.9).

The emulsion was examined and found to contain discrete crosslinked polymeric particles.

The aqueous emulsion prepared as described above was inverted into organic solvent (Dowanol DPM®) and water removed by azeotropic distillation as described in connection with Example I. The resultant de-watered dispersion had a resin solids content of 27.8 percent and a water content of about 2.66 percent.

A metallic pigment-containing coating composition was prepared with the microgel dispersion described immediately above as follows:

| Ingredients | Parts by weight |
|---|---|
| Pigment paste of Example I | 12.4 |
| AT 400 CA | 81.2 |
| Cymel 303® | 30.0 |
| p-toluenesulfonic acid (as in Example I) | 6.0 |
| Microgel of Example IV | 21.6 |
| Methyl amyl ketone | 21.1 |

The coating composition was thinned with additional methyl amyl ketone to a No. 4 Ford cup viscosity of 22 seconds.

The coating composition was sprayed onto primed steel panels at a dry film thickness of about 50.8 µm (2 mils) and the coating cured and evaluated as described in Example I. The results are reported in Table I below.

Comparative Example V

For the purpose of comparison, a coating composition similar to those of Examples I to IV was prepared but with no microgel dispersion. The coating composition was prepared from the following ingredients:

| Ingredients | Parts by weight |
|---|---|
| Pigment paste of Example I | 12.4 |
| AT 400 CA | 89.2 |
| Cymel 303® | 30.0 |
| p-toluenesulfonic acid (as in Example I) | 6.0 |
| Methyl amyl ketone | 34.7 |

The coating composition was thinned with additional methyl amyl ketone to a No. 4 Ford cup viscosity of 22 seconds.

The coating composition was sprayed onto primed steel panels at a film thickness of about 50.8 µm (2 mils) and the coating cured and evaluated as described in Example I. The results are reported in Table I below.

TABLE I

| | Coating properties | |
|---|---|---|
| Coating of Example | 20° gloss | Sag |
| I | 43 | no |
| II | 68 | no |
| III | 40 | no |
| IV | 66 | no |
| V | 58 | yes |

With regard to metallic pigment pattern control, the cured coatings were evaluated by their degree of flop, that is, the visual change in lightness of the coating with a change in viewing angle from 180 to 90 degrees. The results from best to worst were as follows:

II>IV>I>III≫V.

**Claims for the Contracting States: BE, DE, FR, GB, IT, SE**

1. A coating composition comprising a film-forming polymer in combination with silicon-containing crosslinked polymeric microparticles, characterized in that the crosslinked polymeric microparticles are prepared by aqueous emulsion polymerization techniques of a mixture of vinyl monomers which includes a hydrolyzable vinyl silane monomer which participates in the crosslinking reaction of the polymerized vinyl monomers.

2. The composition of Claim 1 characterized in that the hydrolyzable vinyl silane monomer is of the structure $(R)_3$—Si—X where X is a group of the structure

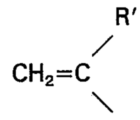 and 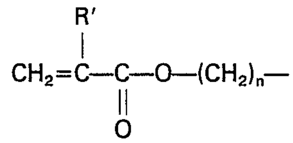

where R is a hydrolyzable radical selected from the group consisting of hydroxy, acetoxy and alkoxy radicals, n is an integer of from 1 to 8 and R′ is hydrogen or methyl.

3. The composition of Claim 2 characterized in that the alkoxy radicals are selected from the class consisting of methoxy, ethoxy, methoxyethoxy and acetoxy including mixtures thereof.

4. The composition of Claim 2 characterized in that the hydrolyzable vinyl silane monomer is gamma-methacryloxypropyltrimethoxysilane.

5. The coating composition of Claim 1 characterized in that the polymeric microparticles are prepared in the presence of a mixture of a hydrolyzable vinyl silane monomer and a hydrolyzable or partially hydrolyzed silane or silicate which do not contain vinyl groups.

6. The composition of Claim 1 characterized in that the mixture of vinyl monomers includes a monomer selected from the class consisting of alkyl acrylates and alkyl methacrylates containing from 1 to 20 carbon atoms in the alkyl group, hydroxyalkyl acrylates and methacrylates containing from 2 to 4 carbon atoms in the alkyl group, vinyl aromatic compounds and acid group-containing vinyl monomers, including mixtures thereof.

7. The composition of Claim 1 characterized in that the polymerization is initiated at a pH within the range of about 5 to 8 and the hydrolysis-crosslinking reaction of the silane moiety is accelerated by lowering the pH to about 2 to 4 during or towards the end of the polymerization or by adding a tin catalyst.

8. The coating composition of Claim 1 characterized in that it is organic solvent-based.

9. The coating composition of Claim 1 characterized in that it is aqueous-based.

10. Method for coating substrates by applying a coating composition of any of claims 1 to 9 on the substrates.

11. The method of Claim 10 characterized in that the composition is pigmented and supplied to the substrate forming a base coat and a clear coat is supplied onto the base coat.

12. The method of Claim 11 characterized in that the clear coat comprises a composition of Claims 1 to 9.

**Claims for the Contracting State: AT**

1. A method for preparing a coating composition comprising a film forming polymer in combination with silicon-containing crosslinked polymeric microparticles, characterized in that the crosslinked polymeric microparticles are prepared by aqueous emulsion polymerization techniques of a mixture of vinyl monomers which includes a hydrolyzable vinyl silane monomer which participates in the crosslinking reaction of the polymerized vinyl monomers.

2. The method of Claim 1 characterized in that the hydrolyzable vinyl silane monomer is of the structure $(R)_3$—Si—X where X is a group of the structure

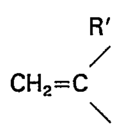 and 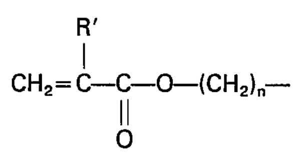

where R is a hydrolyzable radical selected from the group consisting of hydroxy, acetoxy and alkoxy radicals, n is an integer of from 1 to 8 and R′ is hydrogen or methyl.

3. The method of Claim 2 characterized in that the alkoxy radicals are selected from the class consisting of methoxy, ethoxy, methoxyethoxy and acetoxy including mixtures thereof.

4. The method of Claim 2 characterized in that the hydrolyzable vinyl silane monomer is gamma-methacryloxypropyltrimethoxysilane.

5. The method of Claim 1 characterized in that the polymeric microparticles are prepared in the

presence of a mixture of a hydrolyzable vinyl silane monomer and a hydrolyzable or partially hydrolyzed silane or silicate which do not contain vinyl groups.

6. The method of Claim 1 characterized in that the mixture of vinyl monomers includes a monomer selected from the class consisting of alkyl acrylates and alkyl methacrylates containing from 1 to 20 carbon atoms in the alkyl group, hydroxyalkyl acrylates and methacrylates containing from 2 to 4 carbon atoms in the alkyl group, vinyl aromatic compounds and acid groups-containing vinyl monomers, including mixtures thereof.

7. The method of Claim 1 characterized in that the polymerization is initiated at a pH within the range of about 5 to 8 and the hydrolysis-crosslinking reaction of the silane moiety is accelerated by lowering the pH to about 2 to 4 during or towards the end of the polymerization or by adding a tin catalyst.

8. The method of Claim 1 characterized in that it is organic solvent-based.

9. The method of Claim 1 characterized in that it is aqueous-based.

10. Method for coating substrates by applying a coating composition of any of claims 1 to 9 on the substrates.

11. The method of Claim 10 characterized in that the composition is pigmented and supplied to the substrate forming a base coat and a clear coat is supplied onto the base coat.

12. The method of Claim 11 characterized in that the clear cost comprises a composition of Claims 1 to 9.

**Patentansprüche für die Vertragsstaaten: BE, DE, FR, GB, IT, SE:**

1. Beschichtungszusammensetzung enthaltend ein filmbildendes Polymer in Kombination mit siliciumhaltigen, vernetzten Polymermikroteilchen, dadurch gekennzeichnet, daß die vernetzten Polymermikroteilchen durch wässrige Emulsionspolymerisation einer Mischung von Vinylmonomeren, die ein hydrolysierbares Vinylsilanmonomer enthält, das an der Vernetzungsreaktion der polymerisierten Vinylmonomeren teilnimmt, hergestellt sind.

2. Zusammensetzung nach Anspruch 1, dadurch gekennzeichnet, daß das hydrolisierbare Vinylsilanmonomer die Formel $(R)_3$—Si—X aufweist, in der X eine Gruppe der Formel

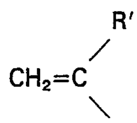

and

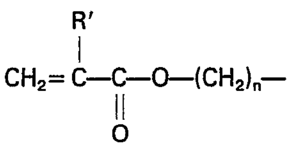

ist, in der R ein hydrolierbarer Rest aus der Gruppe Hydroxy- Acetoxy- und Alkoxygruppen, n eine ganze Zahl von 1 bis 8 und R' Wasserstoff oder Methyl ist.

3. Zusammensetzung nach Anspruch 2, dadurch gekennzeichnet, daß die Alkoxygruppen aus Methoxy, Ethoxy, Methoxyethoxy und Acetoxy einschließlich Mischungen derselben ausgewählt sind.

4. Zusammensetzung nach Anspruch 2, dadurch gekennzeichnet, daß das hydrolisierbare Vinylsilanmonomer Gamma-Methacryloxypropyltrimethoxysilan ist.

5. Zusammensetzung nach Anspruch 1, dadurch gekennzeichnet, daß die Polymermikroteilchen in Gegenwart einer Mischung eines hydrolierbaren Vinylsilanmonomeren und eines hydrolisierbaren oder teilweise hydrolisierten Silan oder Silikats, das keine Vinylgruppen enthält, hergestellt sind.

6. Zusammensetzung nach Anspruch 1, dadurch gekennzeichnet, daß die Mischung aus Vinylmonomeren ein Monomer, das aus der Gruppe Alkylacrylate und Alkylmethacrylaten mit 1 bis 20 Kohlenstoffatomen in der Alkylgruppe, Hydroxyalkylacrylaten und Methacrylaten enthaltend 2 bis 4 Kohlenstoffatomen in der Alkylgruppe, vinylaromatischen Verbindungen und Säuregruppen enthaltenden Vinylmonomeren einschließlich Mischungen derselben ausgewählt ist, enthält.

7. Zusammensetzung nach Anspruch 1, dadurch gekennzeichnet, daß die Polymerisation bei einem pH im Bereich von etwa 5 bis 8 begonnen wird und die Hydrolyse-Vernetzungsreaktion der Silangruppe während oder gegen Ende der Polymerisation durch Erniedrigen des pH auf etwa 2 bis 4 oder durch Zugabe eines Zinnkatalysators beschleunigt wird.

8. Zusammensetzung nach Anspruch 1, dadurch gekennzeichnet, daß sie lösungsmittelhaltig ist.

9. Zusammensetzung nach Anspruch 1, dadurch gekennzeichnet, daß sie wässrig ist.

10. Verfahren zum Beschichten von Substraten durch Aufbringen einer Beschichtungszusammensetzung nach jedem der Ansprüche 1 bis 9 auf die Substrate.

11. Verfahren nach Anspruch 10, dadurch gekennzeichnet, daß die Zusammensetzung Pigmente enthält und auf das Substrat als Grundschicht aufgebracht wird und eine durchsichtige Schicht auf die Grundschicht aufgebracht wird.

12. Verfahren nach Anspruch 11, dadurch gekennzeichnet, daß die durchsichtige Schicht eine Zusammensetzung nach den Ansprüchen 1 bis 9 enthält.

**Patentansprüche für den Vertragsstaat: AT**

1. Verfahren zur Herstellung einer Beschichtungszusammensetzung enthaltend ein filmbildendes

Polymer in Kombination mit siliciumhaltigen, vernetzten Polymermikroteilchen, dadurch gekennzeichnet, daß die vernetzten Polymermikroteilchen durch wässrige Emulsionspolymerisation einer Mischung von Vinylmonomeren, die ein hydrolysierbares Vinylsilanmonomer enthält, das an der Vernetzungsreaktion der polymerisierten Vinylmonomeren teilnimmt, hergestellt sind.

2. Verfahren nach Anspruch 1, dadurch gekennzeichnet, uß das hydrolisierbare Vinlsilanmonomer die Formel $(R)_3$—Si—X aufweist, in der X eine Gruppe der Formel

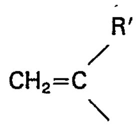
and
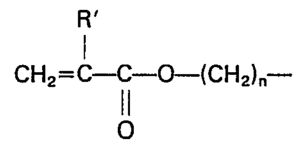

ist, in der R ein hydrolierbarer Rest aus der Gruppe Hydroxy-, Acetoxy- und Alkoxygruppen, n eine ganze Zahl von 1 bis 8 und R' Wasserstoff oder Methyl ist.

3. Verfahren nach Anspruch 2, dadurch gekennzeichnet, daß die Alkoxygruppen aus Methoxy, Ethoxy, Methoxyethoxy und Acetoxy einschließlich Mischungen derselben ausgewählt sind.

4. Verfahren nach Anspruch 2, dadurch gekennzeichnet, daß das hydrolisierbare Vinylsilanmonomer Gamma-Methacryloxypropyltrimethoxysilan ist.

5. Verfahren nach Anspruch 1, dadurch gekennzeichnet, daß die Polymermikroteilchen in Gegenwart einer Mischung eines hydrolierbaren Vinylsilanmonomeren und eines hydrolisierbaren oder teilweise hydrolisierten Silan oder Silikats, das keine Vinylgruppen enthält, hergestellt sind.

6. Verfahren nach Anspruch 1, dadurch gekennzeichnet, daß die Mischung aus Vinylmonomeren ein Monomer, das aus der Gruppe Alkylacrylate und Alkylmethacrylaten mit 1 bis 20 Kohlenstoffatomen in der Alkylgruppe, Hydroxyalkylacrylaten und Methacrylaten enthaltend 2 bis 4 Kohlenstoffatomen in der Alkylgruppe, vinylaromatischen Verbindungen und Säuregruppen enthaltenden Vinylmonomeren einschließlich Mischungen derselben ausgewählt ist, enthält.

7. Verfahren nach Anspruch 1, dadurch gekennzeichnet, daß die Polymerisation bei einem pH im Bereich von etwa 5 bis 8 begonnen wird und die Hydrolyse-Vernetzungsreaktion de Silangruppe während oder gegen Ende der Polymerisation durch Erniedrigen des pH auf etwa 2 bis 4 oder durch Zugabe eines Zinnkatalysators beschleunigt wird.

8. Verfahren nach Anspruch 1, dadurch gekennzeichnet, daß sie lösungsmittelhaltig ist.

9. Verfahren nach Anspruch 1, dadurch gekennzeichnet, daß sie wässrig ist.

10. Verfahren zum Beschichten von Substraten durch Aufbringen einer Beschichtungszusammensetzung nach jedem der Ansprüche 1 bis 9 auf die Substrate.

11. Verfahren nach Anspruch 10, dadurch gekennzeichnet, daß die Zusammensetzung Pigmente enthält und auf das Substrat als Grundschicht aufgebracht wird und eine durchsichtige Schicht auf die Grundschicht aufgebracht wird.

12. Verfahren nach Anspruch 11, dadurch gekennzeichnet, daß die durchsichtige Schicht eine Zusammensetzung nach den Ansprüchen 1 bis 9 enthält.

**Revendications pour les Etats Contractants: BE, DE, FR, GB, IT, SE**

1. Composition de revêtement comprenant un polymère feuillongène en combinaison avec des microparticules polymères réticulés contenant du silicium, caractérisée en ce que les microparticules polymères réticulées se préparent par mise en oeuvre de techniques de polymérisation en émulsion aqueuse d'un mélange de monomères vinyliques, qui comprend un monomère de vinyl silane hydrolysable qui participe à la réaction de réticulation des monomères vinyliques polymérisés.

2. Composition suivant la revendication 1, caractérisé en ce que le monomère de vinyl silane hydrolysable répond à la structure $(R)_3$—Si—X où X représente un radical de la structure

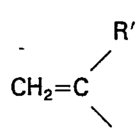
et
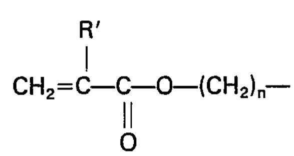

où R représente un radical hydrolysable choisi dans le groupe formé par les radicaux hydroxyle, acétoxy et alcoxy, n représente un nombre entier dont la valeur varie de 1 à 8 et R' représente un atome d'hydrogène ou le radical méthyle.

3. Composition suivant la revendication 2, caractérisée en ce que les radicaux alcoxy sont choisis dans la classe formée par les groupes méthoxy, éthoxy, méthoxyéthoxy et acétoxy, y compris leurs mélanges.

4. Composition suivant la revendication 2, caractérisée en ce que le monomère de vinyl silane hydrolysable est la gamma-méthacryloxypropyltriméthoxysilane.

5. Composition de revêtement suivant la revendication 1, caractérisée en ce que les microparticules

polymères se préparent en présence d'un mélange d'un monomère de vinyl silane hydrolysable et d'un silicate ou silane hydrolysable ou partiellement hydrolysé qui ne contient pas de radicaux vinyle.

6. Composition suivant la revendication 1, caractérisée en ce que le mélange de monomères vinyliques comprend un monomère choisi dans la classe formée par les acrylates d'alkyle et les méthacrylates d'alkyle, dont le radical alkyle contient de 1 à 20 atomes de carbone, les méthacrylates et acrylates d'hydroxyalkyle, dont le radical alkyle contient de 2 à 4 atomes de carbone, les composés vinyl aromatiques et les monomères vinyliques contenant un radical acide, y comprise leurs mélanges.

7. Composition suivant la revendication 1, caractérisée en ce que l'on amorce la polymérisation à un pH qui varie dans la gamme d'environ 5 à 8 et on accélère la réaction d'hydrolyse -réticulation du groupement silane en abaissant le pH jusqu'à environ 2 à 4 au cours ou vers la fin de la polymérisation, ou en ajoutant un catalyseur à l'étain.

8. Composition de revêtement suivant la revendication 1, caractérisée en ce qu'elle est à base d'un solvant organique.

9. Composition de revêtement suivant la revendication 1, caractérisée en ce qu'elle est à base aqueuse.

10. Procédé de revêtement de subjectiles par l'application d'une composition de revêtement suivant l'une quelconque des revendications 1 à 9 sur les subjectiles en question.

11. Procédé suivant la revendication 10, caractérisé en ce que l'on pigmente la composition et on l'applique sur le subjectile de manière à former une couche de fond et on applique une couche transparente sur la couche de fond.

12. Procédé suivant la revendication 11, caractérisé en ce que la couche transparente comprend une composition suivant l'une quelconque des revendications 1 à 9.

**Revendications pour l'Etat Contractant: AT**

1. Procédé de préparation d'une composition de revêtement comprenant un polymère feuillogène en combinaison avec des microparticules polymères réticulées contenant du silicium, caractérisé en ce que les microparticules polymères réticulées se préparent par mise en oeuvre de techniques de polymérisation en émulsion aqueuse d'un mélange de monomères vinyliques, qui comprend un monomère de vinyl silane hydrolysable qui participe à la réaction de réticulation des monomères vinyliques polymèrisés.

2. Procédé suivant la revendication 1, caractérisé en ce que le monomère de vinyl silane hydrolysable répond à la structure $(R)_3$—Si—X où X représente un radical de la structure

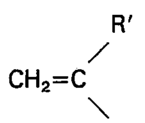

et

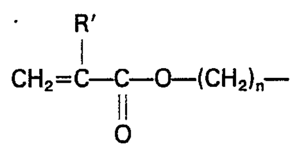

où R représente un radical hydrolysable choisi dans le groupe formé par les radicaux hydroxyle, acétoxy et alcoxy, n représente un nombre entier dont la valeur varie de 1 à 8 et R' représente un atome d'hydrogène ou le radical méthyle.

3. Procédé suivant la revendication 2, caractérisé en ce que les radicaux alcoxy sont choisis dans la classe formée par les groupes méthoxy, éthoxy, méthoxyéthoxy et acétoxy, y compris leurs mélanges.

4. Procédé suivant la revendication 2, caractérisé en ce que le monomère de vinyle silane hydrolysable est la gamma-méthacryloxypropyltriméthoxysilane.

5. Procédé suivant la revendication 1, caractérisé en ce que les microparticules polymères se préparent en présence d'un mélange d'un monomère de vinyl silane hydrolysable et d'un silicate ou silane hydrolysable et partiellement hydrolysé qui ne contient pas de radicaux vinyle.

6. Procédé suivant la revendication 1, caractérisé en ce qe le mélange de monomères vinyliques comprend un monomère choisi dans la classe formée par les acrylates d'alkyle et les méthacrylates d'alkyle, dont le radical alkyle contient de 1 à 20 atomes de carbone, les méthacrylates et acrylates d'hydroxyalkyle, dont le radical alkyle contient de 2 à 4 atomes de carbone, les composés vinyl aromatiques et les monomères vinyliques contenant un radical acide, y compris leurs mélanges.

7. Procédé suivant la revendication 1, caractérisé en ce que l'on amorce la polymèrisation à un pH qui varie dans la gamme d'environ 5 à 8 et on accélère la réaction d'hydrolyse-réticulation du groupement silane en abaissant le pH jusqu'à environ 2 à 4 au cours ou vers la fin de la polymérisation, ou en ajoutant un catalyseur à l'étain.

8. Procédé suivant la revendication 1, caractérisé en ce que la composition de revêtement est à base d'un solvant organique.

9. Procédé suivant la revendication 1, caractérisé en ce que la composition de revêtement est à base aqueuse.

10. Procédé de revêtement de subjectiles par l'application d'une composition de revêtement suivant l'une quelconque des revendications 1 à 9 sur les subjectiles en question.

11. Procédé suivant la revendication 10, caractérisé en ce que l'on pigmente la composition est on

l'applique sur le subjectile de manière à former une couche de fond et on applique un couche transparente sur la couche de fond.

12. Procédé suivant la revendication 11, caractérisé en ce que la couche transparente comprend une composition suivant l'une quelconque des revendications 1 à 9.